# EUROPEAN PATENT SPECIFICATION

(11) **EP 3 970 919 B1**
(45) Date of publication and mention of the grant of the patent: **11.01.2023**
(21) Application number: 21196754.2
(22) Date of filing: 15.09.2021
(51) Int. Cl.: B25H 1/06

(54) **TRESTLE**
STÜTZBOCK
TRÉTEAU

(30) Priority: 17.09.2020 SE 2051082
(43) Date of publication of application: 23.03.2022
(73) Proprietor: CMC Sweden AB, 432 32 Varberg (SE)
(72) Inventor: CHARLEZ, Rune, 432 53 VARBERG (SE)
(74) Representative: AWA Sweden AB

(56) References cited:
- US-A1- 2009 288 914
- US-B1- 6 422 343
- US-B2- 10 124 479

## Description

### Technical field

The present invention relates generally to a trestle and a method for assembly of a trestle.

### Background art

Construction workers, i.e. carpenters, is one of the professional groups that make use of trestles to upload board-like material such as e.g. plaster boards. On construction sites these trestles are handled carelessly and once any part of the trestle for any reason becomes crooked, the trestle is not repaired since the trestles are relatively cheap to purchase and the amount of man-hour that is required to be spent during the reparation makes it more cost-efficient to purchase a brand new trestle.

According to current state of the art, there is one type of trestle which is assembled from two asymmetric trestle parts, one left part and one right part, which are attached to each other. As soon as one of these trestle parts get crooked, for example when a vehicle on a construction site runs into the trestle, the whole trestle, including both the damaged part and the undamaged part, is discarded, since it is considered to be too time-consuming to find and match undamaged left and right trestle parts. This is a great disadvantage both out of economic and environmental perspective. A trestle according to the preamble of claim 1 and a method for assembling a trestle is known from US 6 422 343 B1.

### Summary of invention

An object of the present invention is to overcome the above described disadvantages.

To this end, the trestle according to the present invention comprises two identical first and second side support members. Since the side support members are identical, any two side support members can be used when assembling the trestle, thus eliminating the need for matching the two side support members with each other. Therefore, if one side support member of a trestle is damaged, the trestle may be disassembled, the damaged side support member may subsequently be discarded, while the undamaged side support member may be kept and used when assembling another trestle. In other words, identical side support members are exchangeable. For instance, if one side support member is destroyed, the old one which is intact may be used together with a new one. Consequently, not the whole trestle is deemed waste but only one part of it, namely the destroyed side support member. For environmental and economic reasons, it is thus an advantage to have exchangeable side support members. The first and second side support members being identical is further advantageous due to the fact that the trestle is easy to manufacture and to store.

Each of the side support members comprises a first and a second leg and a top rail extended between the first and second legs. The first and second legs and the top rail may be manufactured in one piece and of the same material. Further, the first and second legs and top rail may be manufactured of a tubular metal material or a material with a solid cross-section. The cross-section of the top rail may have any suitable shape, such as circular, triangular, rectangular, square, pentagonal, hexagonal or the like. The cross-section of each of the first and the second leg may have any suitable shape, such as circular, triangular, rectangular, square, pentagonal, hexagonal or the like. Further, the first leg may have a cross section being same as or different from the cross-section of the second leg. Further, the cross-section of the first and the second leg may be same as or different from the cross-section of the top rail.

In order to provide stability to the trestle and prevent the side support members from moving in relation to each other, the trestle of the present invention further comprises at least one connecting means attached to the first and second side support members. The at least one connecting means is provided to the first leg of the first side support member and the second leg of the second side support member. In particular, the trestle may comprise a first and a second connecting means, wherein the first connecting means joins the first leg of the first side support member and the second of the second side support member, and wherein the second connecting means joins the second leg of the first side support member and the first leg of the second side support member. The connecting means may be in the form of a chain, a rod, or the like.

According to the present invention, each one of the first and second side support member comprises a first and a second pivot means spaced apart and provided on the top rail, wherein one of the first and the second pivot means is a female part and the other one of the first and the second pivot means is a male part. The male pivot means is provided with a protruding part having a length C1.

In a mounted state, the first pivot means of the first side support member may be configured to engage with the second pivot means of the second side support member and the second pivot means of the first side support member may be configured to engage with the first pivot means of the second side support member.

The first side support member further comprises a first lock protrusion provided on the top rail of the first side support member, and the second side support member further comprises a second lock protrusion provided on the top rail of the second side support member. The first and the second lock protrusions are arranged to protrude from the top rail. The first and the second lock protrusions are offset a distance C2 in relation to a vertical center line A intersecting perpendicularly through the top rail of the first and the second side support member, respectively. The distance C2 between the vertical center line and the lock protrusions and the length C1 of the protruding part of the male pivot means is selected such that C2+C2≤C1.

The trestle of the present invention has thus an advantage in that it has a self-regulating lock mechanism. The lock mechanism is accomplished by a combination of a first and a second lock protrusion, and the configuration of a first and a second pivot means, i.e. a female part and a male part. The two lock protrusions are provided at a distance from each other (distance C2+C2) which is shorter than or equal to the length C1 of a protruding part of the male pivot means which is adapted to be located within the female part when the trestle is in a mounted state. Hereby, the lock protrusions prevent disengagement of the male part from the female part when the trestle is mounted. Stated differently, since the distance between the lock protrusions is shorter than or equal to the length of the protruding part, the male part cannot slide out of the female part before the lock protrusions engage and obstruct further movement.

For this to happen, the lock protrusions and the first and second pivot means are preferably provided such that they protrude on the same side of the top rail of the side support member.

In order to dismount the trestle, the user must actively incline the first and second side support members in an angle such that the lock protrusions no longer may engage with each other.

The first and second lock protrusions may be arranged on an opposite side of the vertical center line A from the first pivot means. In other words, the first lock protrusion and the first pivot means may be arranged on either side of the vertical center line A. Further, the second lock protrusion and the second pivot means may be arranged on either side of the vertical center line A.

The first lock protrusion may be provided on a vertical side of the top rail of the first side support member and the second lock protrusion may be provided on a vertical side of the top rail of the second side support member, which vertical sides are arranged to face each other in the mounted state. By the term "vertical side" is meant a surface of the top rail being arranged in substantially vertical plane.

The trestle may be collapsible from a mounted state to a storage state or vice versa. As mentioned above, in a mounted state, the first pivot means of the first side support member may be configured to engage with the second pivot means of the second side support member and the second pivot means of the first side support member may be configured to engage with the first pivot means of the second side support member. On the contrary, in a storage state, the first pivot means and the second pivot means of the first side support member are not engaged with the first pivot means and the second pivot means of the second side support member.

The present invention further relates to a method for assembling a trestle as described above. Thus, the trestle comprises two identical first and second side support members, each comprising a first and a second leg and a top rail extended between the first and second legs. The trestle further comprises at least one connecting means attached to the first and second side support members wherein the at least one connecting means is provided to the first leg of the first side support member and the second leg of the second side support member. Each one of the first and second side support member comprises first and second pivot means spaced apart and provided on the top rail, the first pivot means being a female part and the second pivot means being a male part, wherein the male pivot means is provided with a protruding part having a length C1. Each one of the first and second side support members further comprises a lock protrusion provided on the top rail, such that the lock protrusion is arranged to protrude from the top rai. The lock protrusion is offset a distance C2 in relation to a vertical center line A intersecting perpendicularly through the top rail, wherein C2+C2≤C1.

The method according to the present invention for assembling such a trestle comprises the steps of:
- arranging the first and second side support members such that the first and second pivot means of the respective side support members face each other,
- angling the first and second side support members in relation to each other such that the first and second pivot means may engage with each other without the lock protrusion obstruct engagement,
- sliding one of the first and second side support members in relation to the other, to let the first and second pivot means engage with each other,
- angling the first and second side support members in relation to each other such that the lock protrusion obstruct disengagement of the first and second pivot means in a mounted state,
- connecting the at least one connecting means to the first and second side support members.

The method of the present invention thus offers the advantage of providing a simple and efficient assembly of two identical side support members into a trestle without the need for matching the side support members to each other.

The method of the present invention may further comprise the step of
- sliding the first and second side support members in relation to each other, such that the first and second lock protrusions slides over or past each other.

Further, the method of the present invention may further comprise the step of:
- offsetting one of the first or second side support members in relation to the other side support member in the direction B.

### Brief description of drawings

The invention is now described, by way of example, with reference to the accompanying drawings, in which:
Fig. 1 shows a trestle according to at least one exemplary embodiment of the invention, in a disassembled state,
Fig. 2 shows a trestle in a disassembled state,
Fig. 3 shows a trestle upon assembly,
Fig. 4 shows an enlarged section view of the trestle according to Fig. 3,
Fig. 5 shows a trestle in a partially assembled state,
Fig. 6 shows a trestle in an assembled state,
Fig. 7 shows an enlarged section view of the trestle according to Fig. 6, and
Fig. 8 shows a straight side view of the trestle together with enlarged sections.

### Description of embodiments

In the description below, various directions may be given with reference to a trestle. Example of such directions can be up, down etc. It should be particularly pointed out that the directions for a trestle according to the invention with reference to a trestle provided on a surface in an assembled state ready for use. All examples herein should be seen as part of the general description and therefore possible to combine in any way in general terms. Again, individual features of the various embodiments may be combined or exchanged unless such combination or exchange is clearly contradictory to the overall function of the device.

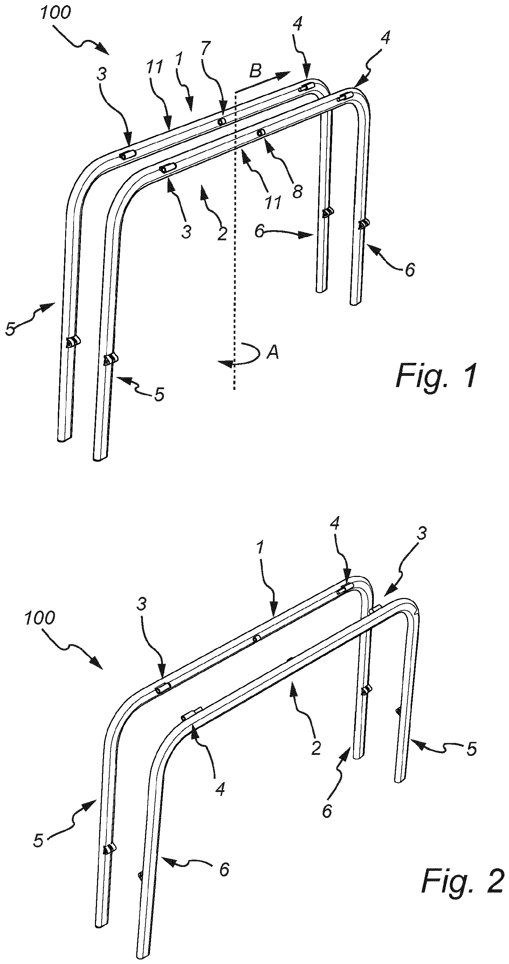

In the following, a detailed description of a trestle according to at least one exemplary embodiment of the invention is given with reference to Figs. 1-8.

In Figs. 1 and 2, first and second side support members 1, 2 of the trestle 100 are shown. The first and second side support members 1, 2 are identical with each other. In the below, only one of the side support members 1, 2 is described, this since these are identical and comprises identical features. Each side support member 1, 2 is shaped as an upside down U and comprises a first leg 5 and a second leg 6 and a top rail 11. The top rail 11 is extended between the first and second legs 5, 6 and provided to connect these. Thus, the top rail 11 is provided in an upper end of the first and the second legs 5, 6. Further, the first and second legs 5, 6 and the top rail 11 of the side support member 1, 2 are inscribed and extend in one and same imaginary plane.

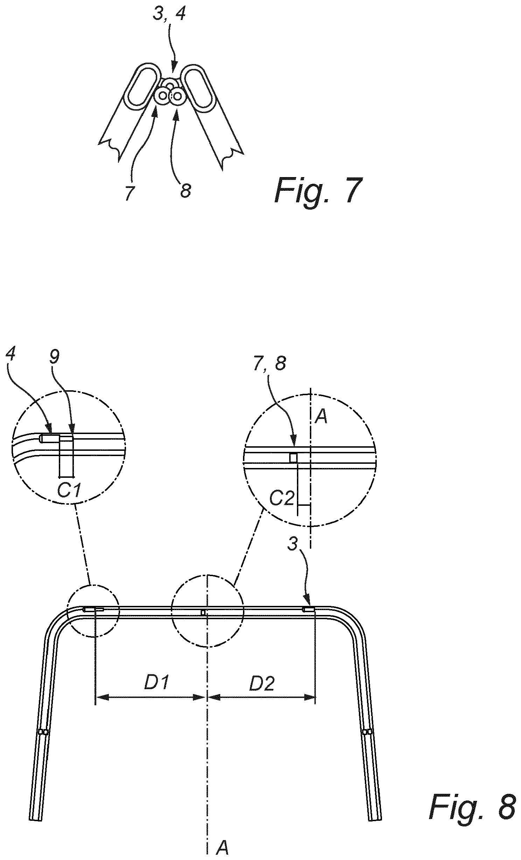

The first and second legs 5, 6 may be provided substantially perpendicular to the top rail 11 or angled in relation to the top rail 11. The first and second legs 5, 6 may be angled outwards in relation to an extension direction B of the top rail 11, i.e. the legs 5, 6 may be arranged in an obtuse angle in relation to the top rail 11. Thus, the legs 5, 6 of the U-shaped side support member 1, 2 may be angled outwards, as shown in Fig. 8. The angled first and second legs 5, 6 give the advantage that the trestle 100 becomes stable during use, in an assembled or mounted state.

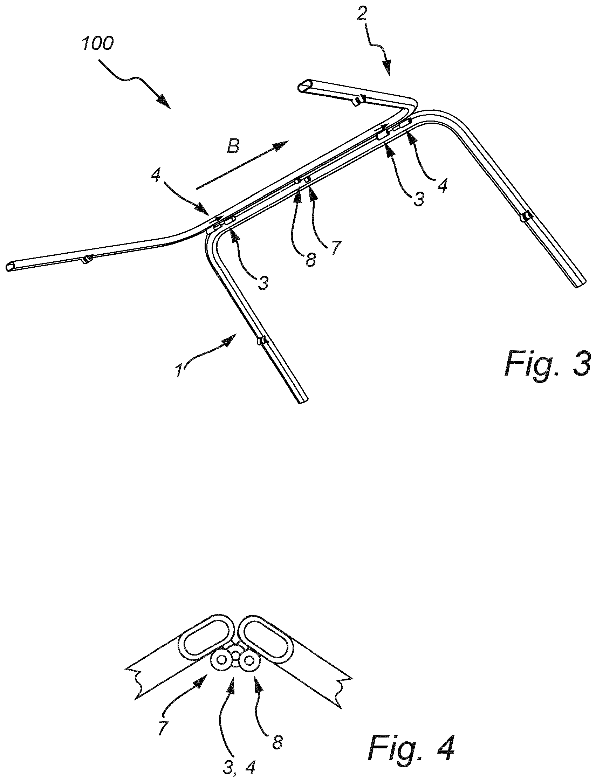

The first and second legs 5, 6 and the top rail 11 of the trestle 100 are manufactured in one piece and of the same material. The trestle 100 is manufactured preferably of metal or any other material. The first and second legs 5, 6 and top rail 11 are preferably manufactured of a tubular metal material, this to reduce the total weight of the trestle 100. In another embodiment, the first and second legs 5, 6 and the top rail 11 may be manufactured of a solid material, i.e. a material with a solid cross-section. The cross section of the material may be circular, rectangular, square, oval, oblong or any other geometry. The U-shape of the side support member 5, 6 is preferably obtained by bending or by means of any other suitable manufacturing method. The tubular material or solid material may be bended on edge. To obtain a stable and durable trestle, the cross section is preferably oblong and, when seen on the cross section of the top rail 11, oriented standing with its shortest side facing an underlying ground surface whereupon the trestle 100 is standing in the assembled state, shown in Figs. 4 and 7.

The side support members 5, 6 comprise first and second pivot means 3, 4 which are spaced apart and provided on the top rail 11. The first and second pivot means 3, 4 may preferably be provided in the end regions of the top rail 11. Thus, the first and second pivot means 3, 4 may be provided in the area where the first and second side support members 5, 6 are attached to the top rail 11. The first pivot means 3 is a female part and the second pivot means 4 is a male part. The male part 4 is provided with a protruding part 9 of length C1, which is adapted to slide into the female part 3, as will be described further down in relation to Fig. 8.

According to at least one exemplary embodiment, the first and second pivot means 3, 4 may be a female hinge part 3 and a male hinge part 4.

The trestle 100 comprises a first lock protrusion 7 provided on the first side support member 1 and a second lock protrusion 8 provided on the second the support member 2. The first and second lock protrusions 7, 8 are provided on the top rail 11. Both the first and second lock protrusions 7, 8 are arranged to protrude from the top rail 11 of the first and second side support members 1, 2. As can be seen in Figs. 1 and 2, the first and second lock protrusions 7, 8 are arranged to protrude vertically on the same side from the top rail 11 as the first and second pivot means 3, 4. When the first and second side support members are facing each other as illustrated in Fig. 2, the first pivot means 3 of the first side support member 1 is arranged to face the second pivot means 4 of the second side support member and vice versa. Similarly, the first lock protrusion 7 of the first side support member 1 is arranged to face the second lock protrusion 8 of the second side support member 2.

The first lock protrusion 7 is provided to face the second lock protrusion 8 provided on the second side support member 2. Centered between the first and second lock protrusions 7, 8, in the assembled state, is a vertical center line A provided. The vertical center line A is substantially perpendicular to the extension direction of the top rail 11.

Each of the first and second lock protrusions 7, 8 is arranged on opposite side of the vertical center line A from the first pivot means 3, as shown in Fig. 8. This may also be described as that the first and second lock protrusions 7, 8 are arranged on the same side of the vertical center line A as the second pivot means 4, shown in Fig. 8.

The male pivot means 4 is provided at a distance D1 from the vertical center line A, measured from an end of the male pivot means 4 which end is provided with a protruding part 9, shown in Fig. 8. Thus, the protruding part 9 of the male pivot means 4 is arranged to protrude towards the vertical center line A and the first or second lock protrusions 7, 8. The female pivot means 3 is provided at a distance D2 from the center line A, measured from an end of the female part provided with an aperture, which in an assembled state, is arranged to engage with the protruding part 9 of the male pivot means 4. Thus, the opening of the female pivot means 3 is provided to face away from the vertical center line A. The distance D1 is equal to the distance D2.

In Fig. 1, the first and second side support members 1, 2 are oriented in the same direction, and are positioned next to and beside each other such that e.g. the first leg 5 of the first side support member 1 is positioned in the same lateral position as the first leg 5 of the second side support member 2. Thus, this applies also for the rest of the features of the first and second side support members 1, 2.

In Fig. 2, the second side support member 2 is rotated 180 around the vertical center line A. When e.g. the second side support member 2 is rotated 180 in relation to the first side support member 1, the first leg 5 of the first side support member 1 is in the same lateral position as the second leg 6 of the second side support member 2. In the positions for the side support members 1, 2, shown in Fig. 2, the trestle 100 is in a state ready to be assembled, wherein the first pivot means 3 of the first side support member 1 is configured to engage with the second pivot means 4 of the second side support member 2, and the second pivot means 4 of the first side support member 1 is adapted to engage with first pivot means 3 of the second side support member 2.

The first lock protrusion 7 is provided on a substantially vertical side of the top rail 11 of the first side support member 1 and the second lock protrusion 8 is provided on a substantially vertical side of the top rail 11 of the second side support member 2, which vertical sides are arranged to face each other in the assembled state, shown in Fig. 4 and Fig. 7.

The first and second lock protrusions 7, 8 are offset the vertical line A intersecting perpendicular through the top rail 11. Each one of the first and second lock protrusions 7, 8 are provided on a side in relation to the vertical line A which side is on the same side as the second pivot means 4 which is the male part, shown in Fig. 8.

The first and second lock protrusions 7, 8 are arranged at a distance from each other, in the assembled state. The distance is measured along the extension direction B of the top rail 11. The distance between two lock protrusions 7, 8, in an assembled state, is the distance C2 between the first lock protrusion 7 of the first side support member 1 and the central vertical line A added to the distance C2 between the second lock protrusion 8 of the second side support member 2 and the vertical line A, i.e. C2+C2. Thus, the distance between the first and second lock protrusions 7, 8 is equal to or less than a length C1 of the protruding part 9 of the second pivot means 4. If the distance between the first and second lock protrusions 7, 8 would be larger than the distance C1, the first and second pivot means 3, 4 would easily become disengaged in the assembled state, as no anvil would be provided in the event any one of the side support members 1, 2 are dislocated along the direction B.

The lock protrusions 7, 8 are fixedly attached to the top rails 11 by means of e.g. welding. The fact that the lock protrusions 7, 8 are fixedly attached to the side support members 1, 2 has the advantage of lock protrusions 7, 8 not being lost during assembling at e.g. at a construction site.

The lock protrusions 7, 8 of the first and second side support members 1, 2 are configured to obstruct disengagement of the first and second pivot means 3, 4 in the assembled state in order to prevent that first and second side support members 1, 2 are disengaged from each other, and cause injuries to the users. Further, the lock protrusions 7, 8 of the first and second side support members 1, 2 are configured to allow engagement of the first and second pivot means 3, 4 during assembly of the first and second side support members 1, 2 during assembly.

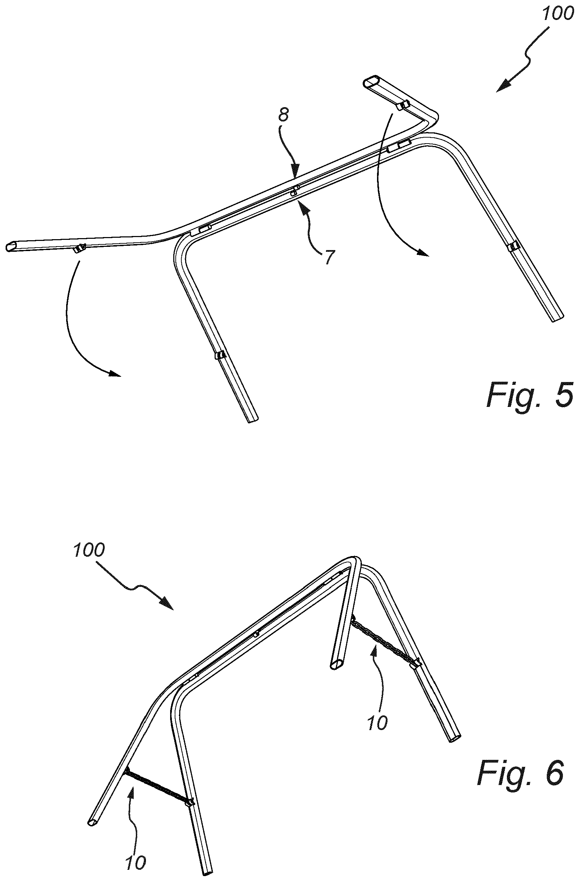

The trestle 100 is provided with at least one connecting means 10. The connecting means 10 is arranged to arrest the trestle 100 in an upstanding assembled state ready for use, with its first and second side support members 1, 2 arranged in an angular relation to each other. The connecting means 10 may be a chain or any other means which may connect the first and second side support members 1, 2 in relation to each other. The connecting means is provided to the first leg 5 of the first side support member 1 and the second leg of 6 the second side support member 2 to arrest the first and second side support members 1, 2 in the assembled state, shown in Fig. 6. The connecting means 10 may be removably or fixedly attached to the first and second side support members 1, 2. The trestle may comprise one connecting means 10. Preferably, the trestle comprises two connecting means, one on each side of the assembled trestle 100.

Further, the trestle is collapsible from the mounted state to a storage state or vice versa. In the storage state, the first and second side support members 1, 2 are substantially parallel with each other. This gives the advantage that the trestle takes up a minimal storage area e.g. during transportation.

Upon assembly of the trestle 100, the first side support member 1, the second side support member 2 and at least one connecting means 10 are needed. Upon assembly, the first and second side support members 1, 2 are arranged such that the first pivot means 3 of the first side support member 1 faces the second pivot means 4 of the second side support member 2, and the second pivot means 4 of the first side support member 1 faces the first pivot means 3 of the second side support member 2.

Further, the first and second side support members 1, 2 are inclined in relation to each other such that the first and second pivot means 3, 4 may engage with each other without the lock protrusions 7, 8 obstructing engagement, as is shown in Fig 3 and 4. Further, e.g. the first side support member 1 is moved laterally in the direction B in relation to the second side support member 2. Thus, the first side support member 1 is laterally offset to the second side support member 2, shown in Fig. 3. The lateral offset distance is at least the distance C1. Otherwise, the first and second pivot means 3, 4 are arrested from engaging with each other. Thus, the first and second pivot means 3, 4 are positioned so that they are aligned along the same longitudinal axis, such that the first and second pivot means 3, 4 may engage with each other when either of the first and second side support members 1, 2 slides in relation to the other one along the direction B, at the same time as the first and second side support members 1, 2 are angled in relation to each other, without the lock protrusions 7, 8 engaging with each other.

Upon assembly, shown in Fig. 4, the first and second side support members 1, 2 are inclined in relation to each other. The inclination angle allows the first and second side support members 1, 2 to slide in relation to each other without the first and second lock protrusions 7, 8 to engage with each other. Upon sliding the first and second side support members 1, 2 in relation to each other, the first and second lock protrusions 7, 8 slides over and past each other such that they engage with each other in the mounted state and more or less obstruct a movement of the first and second side support members 1, 2 in relation to each other, shown in Fig. 5. Subsequently, the first and second side support members 1, 2 are angled in relation to each other such that the lock protrusions 7, 8 obstruct disengagement of the first and second pivot means 3, 4 in the assembled state, as shown in Fig. 5 and Fig. 7.

Central axes for the first and second lock protrusions 7, 8 extend along the extension direction B for the top rail. Thus, the central axes of the first and second lock protrusions 7, 8 are offset in relation to a common central axis for the first and second pivot means 3, 4, in the mounted state, as shown in Fig. 7. Thus, the central axes of the first and second lock protrusions 7, 8 are provided below the common central axis for the first and second pivot means 3, 4.

In the mounted state, shown in Fig. 7, the first side support member 1 and the second side support member 2 are inclined with an inclination angle between them. The inclination angle between the first and second side support members 1, 2 does not allow the first and second side support members 1, 2 to be slid in relation to each other more than the distance C1. If the first and second side support members 1, 2 are slid more than the distance C1, the first and second lock protrusions 7, 8 engage with each other. Thus, the lock protrusions 7, 8 obstruct disengagement of the first and second pivot means 3, 4 in the assembled state.

In the assembled state, the first and second side support members 1, 2 are angled in relation to each other, and to retain this angle at least one connecting means 10 is connecting the legs 5, 6, shown in Fig. 6. The at least one connecting means 10 arrests the legs 5, 6 of the first and second side support members 1, 2 in relation to each other. Preferably, two connecting means 10 are provided, one on each side of the trestle 100, connecting the legs 5, 6 of the first and second side support members 1, 2.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. Any reference signs in the claims should not be construed as limiting the scope.

## Claims

1. A trestle (100) comprising two identical first and second side support members (1, 2) each comprising a first and a second leg (5, 6 ) and a top rail (11) extended between said first and second legs (5, 6),
at least one connecting means (10) attached to said first and second side support members (1, 2), wherein said at least one connecting means (10) is provided to said first leg (5) of said first side support member (1) and said second leg (6) of said second side support member (2), wherein each one of said first and second side support member (1, 2) comprises:
- first and second pivot means (3, 4) spaced apart and provided on said top rail (11), said first pivot means (3) being a female part and said second pivot means (4) being a male part, wherein said male pivot means (4) is provided with a protruding part (9) having a length C1,
- a lock protrusion (7, 8) provided on said top rail (11), said lock protrusion (7, 8) is arranged to protrude from said top rail, **characterised in that** said lock protrusion is offset a distance C2 in relation to a vertical center line A intersecting perpendicularly through said top rail, wherein C2+C2≤C1.

2. The trestle (100) according to claim 1, wherein in a mounted state said first pivot means (3) of said first side support member (1) is configured to engage with said second pivot means (4) of said second side support member (2) and said second pivot means (4) of said first side support member (1) is configured to engage with said first pivot means (3) of said second side support member (2).

3. The trestle (100) according to any of previous claims, wherein said first and second lock protrusions (7, 8) are arranged on an opposite side of the vertical center line A as said first pivot means (3).

4. The trestle (100) according to any one of previous claims, wherein said first lock protrusion (7) is provided on a vertical side of said top rail (11) of said first side support member (1) and said second lock protrusion (8) is provided on a vertical side of said top rail (11) of said second side support member (2), which vertical sides are arranged to face each other in said mounted state.

5. The trestle (100) according to any one of previous claims, wherein said first and second legs (5, 6) and said top rail (11) are manufactured in one piece and of the same material.

6. The trestle (100) according to any one of previous claims, wherein said first and second legs (5, 6) and top rail (11) are manufactured of a tubular metal material or a material with a solid cross-section.

7. The trestle (100) according to any one of previous claims, wherein said trestle is collapsible from an assembled state to a storage state or vice versa.

8. Method for assembling a trestle (100), said trestle comprising two identical first and second side support members (1, 2), each comprising a first and a second leg (5, 6) and a top rail (11) extended between said first and second legs (5, 6),
at least one connecting means (10) attached to said first and second side support members (1, 2), wherein said at least one connecting means (10) is provided to said first leg (5) of said first side support member (1) and said second leg (6) of said second side support member (2),
wherein each one of said first and second side support member (1, 2) comprises: first and second pivot means (3, 4) spaced apart and provided on said top rail (11), said first pivot means (3) being a female part and said second pivot means (4) being a male part, wherein said male pivot means (4) is provided with a protruding part (9) having a length C1 and a lock protrusion (7, 8) provided on said top rail (11), said lock protrusion is arranged to protrude from said top rail, which said lock protrusion is offset a distance C2 in relation to a vertical center line A intersecting perpendicularly through said top rail,
wherein C2+C2≤C1, comprising the steps of:
- arranging said first and second side support members (1, 2) such that said first and second pivot means (3, 4) of said respective side support members (1, 2) face each other,
- angling said first and second side support members (1, 2) in relation to each other such that said first and second pivot means (3, 4) may engage with each other without said lock protrusion (7, 8) obstruct engagement,
- sliding one of said first and second side support members (1, 2) in relation to the other, to let said first and second pivot means (3, 4) engage with each other,
- angling said first and second side support members (1, 2) in relation to each other such that said lock protrusion (7, 8) obstruct disengagement of said first and second pivot means (3, 4) in a mounted state,
- connecting said at least one connecting means (10) to said first and second side support members (1, 2).

9. The method for assembling a trestle according to claim 8, further comprising the step:
- sliding said first and second side support members (1, 2) in relation to each other, such that said first and second lock protrusions (7, 8) slides over or past each other.

10. The method for assembling a trestle according to any one of claims 8-9, further comprising the step:
- offsetting one of said first or second side support members (1, 2) in relation to the other side support member (1, 2) in the direction B.

## Patentansprüche

1. Stützbock (100), der zwei identische erste und zweite Seitenträgerelemente (1, 2) umfasst, wobei jedes ein erstes und ein zweites Bein (5, 6) und eine obere Schiene (11), die sich jeweils zwischen dem ersten und dem zweiten Bein (5, 6) erstreckt, umfasst,
mindestens ein Verbindungsmittel (10) umfasst, das an den ersten und zweiten Seitenträgerelementen (1, 2) befestigt ist, wobei das mindestens eine Verbindungsmittel (10) für das erste Bein (5) des ersten Seitenträgerelements (1) und für das zweite Bein (6) des zweiten Seitenträgerelements (2) bereitgestellt ist, wobei jedes der ersten und zweiten Seitenträgerelemente (1, 2) umfasst:
- ein erstes und ein zweites Gelenkelement (3, 4), die beabstandet zueinander angeordnet und auf der oberen Schiene (11) bereitgestellt sind, wobei das erste Gelenkelement (3) ein aufnehmendes Teileelement ist und das zweite Gelenkelement (4) ein Steckteil ist, wobei das Steckgelenkelement (4) mit einem hervorstehenden Teil (9) versehen ist, das eine Länge C1 aufweist,
- einen Blockierüberstand (7, 8), der auf der oberen Schiene (11) bereitgestellt ist, wobei der Blockierüberstand (7, 8) angeordnet ist, um von der oberen Schiene überzustehen, **dadurch gekennzeichnet, dass** der Blockierüberstand um einen Abstand C2 in Bezug auf eine vertikale Mittelinie A, die senkrecht die obere Schiene durchschneidet, versetzt ist, wobei C2 + C2 ≤ C1 ist.

2. Stützbock (100) nach Anspruch 1, wobei in einem befestigten Zustand das erste Gelenkelement (3) des ersten Seitenträgerelements (1) konfiguriert ist, um in das zweite Gelenkelement (4) des zweiten Seitenträgerelements (2) einzugreifen, und wobei das zweite Gelenkelement (4) des ersten Seitenträgerelements (1) konfiguriert ist, um in das erste Gelenkelement (3) des zweiten Seitenträgerelements (2) einzugreifen.

3. Stützbock (100) nach einem der vorhergehenden Ansprüche, wobei der erste und zweite Blockierüberstand (7, 8) auf einer gegenüberliegenden Seite der vertikalen Mittelinie A als das erste Gelenkelement (3) angeordnet sind.

4. Stützbock (100) nach einem der vorhergehenden Ansprüche, wobei der erste Blockierüberstand (7) auf einer vertikalen Seite der oberen Schiene (11) des ersten Seitenträgerelements (1) bereitgestellt ist, und wobei der zweite Blockierüberstand (8) auf einer vertikalen Seite der oberen Schiene (11) des zweiten Seitenträgerelements (2) bereitgestellt ist, wobei die vertikalen Seiten angeordnet sind, um sich in einem befestigten Zustand gegenüberzustehen.

5. Stützbock (100) nach einem der vorhergehenden Ansprüche, wobei das erste und das zweite Bein (5, 6) und die obere Schiene (11) in einem Stück und aus demselben Material hergestellt sind.

6. Stützbock (100) nach einem der vorhergehenden Ansprüche, wobei das erste und das zweite Bein (5, 6) und die obere Schiene (11) aus einem rohrförmigen Metallmaterial oder aus einem Material mit einem massiven Querschnitt hergestellt sind.

7. Stützbock (100) nach einem der vorhergehenden Ansprüche, wobei der Stützbock aus einem zusammengesetzten Zustand zu einem Lagerungszustand und umgekehrt zusammenklappbar ist.

8. Verfahren zum Zusammenbauen eines Stützbocks (100), wobei der Stützbock zwei identische erste und zweite Seitenträgerelemente (1, 2) umfasst, wobei jedes ein erstes und ein zweites Bein (5, 6) und eine obere Schiene (11), die sich jeweils zwischen dem ersten und dem zweiten Bein (5, 6) erstreckt, umfasst,
mindestens ein Verbindungsmittel (10) umfasst, das an den ersten und zweiten Seitenträgerelementen (1, 2) befestigt ist, wobei das mindestens eine Verbindungsmittel (10) für das erste Bein (5) des ersten Seitenträgerelements (1) und für das zweite Bein (6) des zweiten Seitenträgerelements (2) bereitgestellt ist,
wobei jedes der ersten und zweiten Seitenträgerelemente (1, 2) umfasst:
ein erstes und ein zweites Gelenkelement (3, 4), die beabstandet zueinander angeordnet und auf der oberen Schiene (11) bereitgestellt sind, wobei das erste Gelenkelement (3) ein aufnehmendes Teileelement ist und das zweite Gelenkelement (4) ein Steckteil ist,
wobei das Steckgelenkelement (4) mit einem hervorstehenden Teil (9) versehen ist, das eine Länge C1 aufweist, und wobei ein Blockierüberstand (7, 8) auf der oberen Schiene (11) bereitgestellt ist,
wobei der Blockierüberstand (7, 8) angeordnet ist, um von der oberen Schiene überzustehen, wobei der Blockierüberstand um einen Abstand C2 in Bezug auf eine vertikale Mittelinie A, die die obere Schiene senkrecht durchschneidet, versetzt ist,
wobei C2 + C2 ≤ C1 ist, wobei das Verfahren die folgenden Schritte umfasst:
- Anordnen des ersten und zweiten Seitenträgerelements (1, 2) derart, dass sich das erste und das zweite Gelenkelement (3, 4) der jeweiligen Seitenträgerelemente (1, 2) gegenüberstehen,
- Anwinkeln des ersten und zweiten Seitenträgerelements (1, 2) in Bezug zueinander derart, dass das sich das erste und zweite Gelenkelement (3, 4) gegenseitig in Eingriff bringen, ohne dass dabei der Blockierüberstand (7, 8) den Eingriff behindert,
- Verschieben eines der Seitenträgerelemente (1, 2), entweder des ersten oder des zweiten, in Bezug auf das andere, um das erste und das zweite Gelenkelement (3, 4) gegenseitig eingreifen zu lassen.
- Anwinkeln des ersten und zweiten Seitenträgerelements (1, 2) in Bezug zueinander derart, dass der Blockierüberstand (7, 8) die Auflösung des Eingriffs des ersten und des zweiten Gelenkelements (3, 4) in einem befestigten Zustand behindert,
- Verbinden des mindestens einen Verbindungsmittels (10) mit dem ersten und zweiten Seitenträgerelement (1, 2).

9. Verfahren zum Zusammenbauen eines Stützbocks nach Anspruch 8, das ferner den Schritt umfasst:
- Verschieben des ersten und zweiten Seitenträgerelements (1, 2) in Bezug zueiander derart, dass sich der erste und zweite Blockierüberstand (7, 8) übereinander oder nebeneinander gleitend verschieben.

10. Verfahren zum Zusammenbauen eines Stützbocks nach einem der Ansprüche 8-9, das ferner den Schritt umfasst:
- Versetzen eines der Seitenträgerelemente (1, 2), entweder des ersten oder des zweiten, in Bezug auf die andere Seite des Seitenträgerelements (1, 2) in die Richtung B.

## Revendications

1. Tréteau (100) comprenant deux premier et deuxième éléments de support latéraux identiques (1, 2) comprenant chacun un premier et un deuxième pied (5, 6) et un rail supérieur (11) s'étendant entre lesdits premier et deuxième pieds (5, 6),
au moins un moyen de raccordement (10) fixé auxdits premier et deuxième éléments de support latéraux (1, 2), dans lequel ledit au moins un moyen de raccordement (10) est prévu sur ledit premier pied (5) dudit premier élément de support latéral (1) et de ladite deuxième branche (6) dudit deuxième élément de support latéral (2), dans lequel chacun desdits premier et deuxième éléments de support latéraux (1, 2) comprend :
- des premier et deuxième moyens de pivot (3, 4) espacés et prévus sur ledit rail supérieur (11), ledit premier moyen de pivot (3) étant une partie femelle et ledit deuxième moyen de pivot (4) étant une partie mâle, dans lequel ledit moyen de pivot mâle (4) est pourvu d'une partie en protubérance (9) ayant une longueur C1,
- une protubérance de verrouillage (7, 8) prévue sur ledit rail supérieur (11), ladite protubérance de verrouillage (7, 8) est agencée pour dépasser protubérante dudit rail supérieur, **caractérisé en ce que** ladite protubérance de verrouillage est décalée d'une distance C2 par rapport à une ligne médiane verticale A coupant perpendiculairement ledit rail supérieur, où C2+C2≤C1.

2. Tréteau (100) selon la revendication 1, dans lequel, dans un état monté, lesdits premiers moyens de pivot (3) dudit premier élément de support latéral (1) sont configurés pour venir en prise avec lesdits deuxièmes moyens de pivot (4) dudit deuxième support latéral (2) et lesdits deuxièmes moyens de pivot (4) dudit premier élément de support latéral (1) sont configurés pour venir en prise avec lesdits premiers moyens de pivot (3) dudit deuxième élément de support latéral (2).

3. Tréteau (100) selon une quelconque des revendications précédentes, dans lequel lesdites première et deuxième protubérances de verrouillage (7, 8) sont agencées sur un côté opposé de la ligne médiane verticale A en tant que lesdits premiers moyens de pivot (3).

4. Tréteau (100) selon une quelconque des revendications précédentes, dans lequel ladite première protubérance de verrouillage (7) est prévue sur un côté vertical dudit rail supérieur (11) dudit premier support latéral (1) et ladite deuxième protubérance de verrouillage (8) est prévue sur un côté vertical dudit rail supérieur (11) dudit deuxième élément de support latéral (2), lesquels côtés verticaux sont agencés pour se faire face dans ledit état monté.

5. Tréteau (100) selon une quelconque des revendications précédentes, dans lequel lesdits premier et deuxième pieds (5, 6) et ledit rail supérieur (11) sont fabriqués en une seule pièce et du même matériau.

6. Tréteau (100) selon une quelconque des revendications précédentes, dans lequel lesdits premier et deuxième pieds (5, 6) et rail supérieur (11) sont fabriqués en un matériau métallique tubulaire ou un matériau à section pleine.

7. Tréteau (100) selon une quelconque des revendications précédentes, dans lequel ledit tréteau est pliable d'un état assemblé à un état de stockage ou vice versa.

8. Procédé d'assemblage d'un tréteau (100), ledit tréteau comprenant deux premier et deuxième éléments de support latéraux (1, 2) identiques, comprenant chacun un premier et un deuxième pied (5, 6) et une traverse supérieure (11) s'étendant entre lesdits premier et deuxième pied (5, 6),
au moins un moyen de raccordement (10) fixé auxdits premier et deuxième éléments de support latéraux (1, 2), dans lequel ledit au moins un moyen de raccordement (10) est prévu sur ledit premier pied (5) dudit premier élément de support latéral (1) et ledit deuxième pied (6) dudit deuxième élément de support latéral (2),
dans lequel chacun desdits premier et deuxième éléments de support latéraux (1, 2) comprend :
des premier et deuxième moyens de pivot (3, 4) espacés et prévus sur ledit rail supérieur (11), lesdits premiers moyens de pivot (3) étant une partie femelle et lesdits deuxièmes moyens de pivot (4) étant une partie mâle, dans lequel ledit moyen de pivot mâle (4) est pourvu d'une partie protubérante (9) ayant une longueur C1 et une protubérance de verrouillage (7, 8) prévue sur ledit rail supérieur (11), ladite protubérance de verrouillage est agencée pour dépasser en saillie dudit rail supérieur, ladite protubérance de verrouillage étant décalée d'une distance C2 en par rapport à une ligne médiane verticale A coupant perpendiculairement ledit rail supérieur,
dans lequel C2+C2≤C1 , comprenant les étapes consistant à :
- agencer lesdits premier et deuxième éléments de support latéraux (1, 2) de sorte que lesdits premier et deuxième moyens de pivot (3, 4) desdits éléments de support latéraux respectifs (1, 2) se font face,
- incliner lesdits premier et deuxième éléments de support latéraux (1, 2) les uns par rapport aux autres de sorte que lesdits premier et deuxième moyens de pivot (3, 4) puissent venir en prise l'un avec l'autre sans que ladite protubérance de verrouillage (7, 8) ne gêne la mise en prise,
- faire coulisser un desdits premier et deuxième éléments de support latéraux (1, 2) l'un par rapport à l'autre, pour laisser lesdits premiers et deuxièmes moyens de pivotement (3, 4) venir en prise l'un avec l'autre,
- incliner lesdits premier et deuxième éléments de support latéraux (1, 2) l'un par rapport à l'autre de sorte que ladite protubérance de verrouillage (7, 8) obstrue le désengagement desdits premier et deuxième moyens de pivot (3, 4) dans un état monté,
- raccorder ledit au moins un moyen de raccordement (10) auxdits premier et deuxième éléments de support latéraux (1, 2).

9. Procédé d'assemblage d'un tréteau selon la revendication 8, comprenant en outre l'étape :
- faire coulisser lesdits premier et deuxième éléments de support latéraux (1, 2) l'un par rapport à l'autre, de sorte que lesdites première et deuxième protubérances de verrouillage (7, 8) coulissent les uns au-dessus ou devant les autres.

10. Procédé d'assemblage d'un tréteau selon une quelconque des revendications 8-9, comprenant en outre l'étape consistant à :
- décaler un desdits premier ou deuxième éléments de support latéraux (1, 2) par rapport à l'autre élément de support latéral (1, 2) dans la direction B.
